(19) Europäisches Patentamt
European Patent Office
Office européen des brevets

(11) EP 2 766 319 B1

(12) # EUROPÄISCHE PATENTSCHRIFT

(45) Veröffentlichungstag und Bekanntmachung des Hinweises auf die Patenterteilung:
**20.04.2016 Patentblatt 2016/16**

(21) Anmeldenummer: **12769637.5**

(22) Anmeldetag: **01.10.2012**

(51) Int Cl.:
***C04B 24/42*** *(2006.01)* ***C04B 28/02*** *(2006.01)*
***C04B 28/14*** *(2006.01)* ***C07F 7/18*** *(2006.01)*
***C08B 5/00*** *(2006.01)* ***C08B 15/05*** *(2006.01)*

(86) Internationale Anmeldenummer:
**PCT/EP2012/069302**

(87) Internationale Veröffentlichungsnummer:
**WO 2013/053609 (18.04.2013 Gazette 2013/16)**

(54) **VERFAHREN ZUR MASSEHYDROPHOBIERUNG VON BAUSTOFFEN MIT FESTEN ORGANOSILICIUMVERBINDUNGEN**

PROCESS FOR THE BODY-HYDROPHOBIZATION OF BUILDING MATERIALS COMPRISING SOLID ORGANOSILICON COMPOUNDS

PROCÉDÉ D'HYDROFUGATION DANS LA MASSE DE MATÉRIAUX DE CONSTRUCTION AU MOYEN DE COMPOSÉS D'ORGANOSILICIUM SOLIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2011 DE 102011084301**

(43) Veröffentlichungstag der Anmeldung:
**20.08.2014 Patentblatt 2014/34**

(73) Patentinhaber: **Wacker Chemie AG**
**81737 München (DE)**

(72) Erfinder:
- **STEPP, Michael**
  **A-5122 Überackern (AT)**
- **KOLLER, Herbert**
  **84547 Emmerting (DE)**
- **SCHILDBACH, Daniel**
  **84503 Altötting (DE)**

(74) Vertreter: **Fritz, Helmut et al**
**Wacker Chemie AG**
**Intellectual Property**
**Hanns-Seidel-Platz 4**
**81737 München (DE)**

(56) Entgegenhaltungen:
**EP-A1- 1 674 436** **WO-A1-2006/097206**
**FR-A1- 2 496 090** **GB-A- 760 100**
**US-A- 2 441 066** **US-A- 2 916 461**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur Herstellung von bei 20°C festen Organosiliciumverbindungen und deren Einsatz bei der Massehydrophobierung von Baustoffen und Baustoffmischungen.

Flüssige, wasserlösliche oder in Wasser dispergierbare Hydrophobiermittel für mineralische Baustoffe auf Basis von Siliconen sind seit langem etabliert. Insbesondere Alkaliorganosiliconate wie Kaliummethylsiliconat werden schon seit Jahrzehnten zur Hydrophobierung, insbesondere zur Imprägnierung von mineralischen Baustoffen eingesetzt. Sie lassen sich aufgrund ihrer guten Wasserlöslichkeit als wässrige Lösung auf Feststoffen applizieren, wo sie nach Verdampfen des Wassers unter dem Einfluss von meist natürlich vorkommendem Kohlendioxid festhaftende, dauerhaft wasserabweisende Oberflächen bilden. Dagegen wird bei der Massehydrophobierung die wässrige Lösung des Organosiliconats gegebenenfalls nach weiterer Verdünnung mit dem wässrigen Slurry (Brei) zum Beispiel eines auf Gips basierenden Baustoffs vermischt. Nach dem Aushärten und Trocknen des Baustoffes wird eine stark reduzierte Wasseraufnahme des Gipsbaustoffs verglichen mit dem unhydrophobierten Baustoff gemessen. Der Vorteil der Massehydrophobierung z.B. von Gips ist, dass der Baustoff nicht nur von einer hydrophoben Zone umgeben ist, sondern durch und durch wasserabweisend ist. Dies ist insbesondere wichtig bei tendenziell wasserlöslichen Baustoffen wie Gips oder wenn der Baustoff nach der wasserabweisenden Behandlung in Stücke geschnitten wird. Dieses Verfahren findet z.B. bei der Herstellung von Gipskartonplatten, Gipswandbauplatten oder Gipsfaserplatten Anwendung.

Gipsputze und -spachtelmassen oder gipsbasierte Estrichsysteme oder Fliesenkleber werden jedoch als Pulver in Säcken oder Silos auf die Baustelle geliefert und erst dort mit dem Anmachwasser angerührt. Für die Anwendung in Gipsputzen, Gipsspachtelmassen, pulverförmigen Gips-Reparaturspachteln, gipsbasierten Fliesenklebern und ähnlichen mineralischen Baustoffen wird daher ein festes Hydrophobiermittel benötigt, das der anwendungsfertigen Trockenmischung zugefügt werden kann und erst bei Zusatz von Wasser während der Applikation vor Ort, z.B. auf der Baustelle, in kurzer Zeit seine hydrophobierende Wirkung entfaltet. Dies nennt man Dry-Mix-Anwendung.

Feste Alkalisiliconate sind als Dry Mix Additiv zur Hydrophobierung von Gips beispielsweise in US 2803561 beschrieben, von zementären Fliesenklebern in DE OS 10107614. Aufgrund ihrer hohen Alkalität wirken sie jedoch stark ätzend. Von ihnen gehen deshalb erhebliche Gesundheitsrisiken bei der Handhabung aus z.B. Verätzung der Atemwege durch Staubinhalation unter Ausbildung eines Lungenödems oder gar irreversible Verletzung der Augen.

Bei den meisten herkömmlichen neutralen Dry-Mix-Hydrophobiermitteln gemäß dem aktuellen Stand der Technik handelt es sich um geträgerte Systeme, d.h. dass ein eigentlich flüssiges Hydrophobiermittel wie z.B. ein Silan- und/oder Siloxanwirkstoff auf ein chemisch mehr oder weniger inertes Trägermaterial aufgetragen wird. Dabei wird nur soviel Hydrophobiermittel aufgetragen, dass ein trockenes und rieselfähiges Pulver erhalten wird. Das Trägermaterial kann anorganischer Natur, z.B. Kieselsäuren, Silicate, oder organischer Natur, z.B. Polyvinylalkohole sein, wie beschrieben in WO 2010052201. Durch das Mischen mit dem Anmachwasser und intensives Vermischen entfaltet das flüssige Hydrophobiermittel seine Wirkung. Herkömmliche Dry-Mix-Hydrophobiermittel haben eine Reihe von Nachteilen. Insbesondere bei Produkten, die Alkylsiloxane enthalten, tritt das Problem auf, dass durch die hohe Hydrophobie der Pulver und vorzeitige Migration des Hydrophobiermittels auf den noch mit Wasser zu mischenden Baustoff eine verzögerte Anmischbarkeit auftritt. Dadurch kommt es zusätzlich zum Zeitverlust zur Ausbildung von unerwünschtem Staub aus dem Baustoff durch die verzögerte Benetzung mit Wasser. Herkömmliche Dry-Mix-Hydrophobiermittel, die dagegen hydrolysierbare (Alkoxy)Silane enthalten, setzen bei der Anwendung flüchtige Bestandteile frei, die gesundheitsschädlich sein können, wie z.B. Methanol (s. WO 2010052201). Darüber hinaus ist bekannt, dass die Silanwirkstoffe von geträgerten Systemen schon beim Sprühtrocknungsprozess, aber auch bei der späteren Lagerung verdampfen können. Das reduziert zudem den Wirkstoffgehalt.

Durch Tausch des Großteils der niedermolekularen Alkoxyreste gegen hochsiedende Glykole versuchte man diesen Nachteil zu beseitigen. Als Voraussetzung für die hydrophobierende Wirkung wurde dabei jeweils eine hohe Wasserlöslichkeit angenommen, die nur durch hohe Anteile an Glykol realisierbar ist. Bei den beschriebenen Produkten handelte sich deshalb üblicherweise um Flüssigkeiten bzw. deren wässrige Lösungen mit dementsprechend hohen Glykolkonzentrationen.

US 2887467 A beschreibt beispielsweise die Synthese von wasserlöslichen Silsesquioxanen durch Umsetzung von nicht wasserlöslichen Silsesquioxanen mit Ethylenglykol bei Temperaturen von etwa 150°C, wobei je Siliziumatom mindestens 3 Äquivalente Ethylenglykol vorhanden sein müssen. Die so erhaltenen Produkte sind grundsätzlich geeignet für den Einsatz als Hydrophobierungsmittel.

DE 1076946 beschreibt ein Verfahren zur Herstellung flüssiger, wasserlöslicher Umsetzungsprodukte durch Umsetzung von Methyl- und/oder Ethylalkoxysilanen (mindestens 50 Mol-% sind Monoalkyltrialkoxysilane) mit Ethylenglykol, wobei mehr als eine Hydroxylgruppe des Ethylenglykols pro Alkoxygruppe eingesetzt wird. Als Katalysator bei der Umalkoxylierung dienen Restgehalte an HCl (aus der Herstellung des Alkoxysilans). Die wässrigen Lösungen dienen zur Hydrophobierung von Oberflächen insbes. von Mauerwerk und Glasfasern. Als Dry Mix Additiv können die Flüssigkeiten dagegen nicht eingesetzt werden. Ersetzt man Ethylenglykol durch Propylenglykol erhält man wasserunlösliche Produkte, ebenso führen Temperaturen von >100°C zu wasserunlöslichen Produkten von geringer Brauchbarkeit.

Die nach DE 1076946 **AS** und US 2887467 A beschriebenen Produkte sind wasserlösliche hydrophobierende Imprägniermittel. Sie sind dadurch gekennzeichnet, dass ein nicht zu unterschreitender mindestens dreifacher Überschuss von polaren Substituenten je Siliciumatom erforderlich ist, um ein geeignetes Hydrophobiermittel zu erhalten. Hydrophobierend wirkt dabei nicht die polare Gruppe, sondern der siliziumbasierende Anteil. Durch den hohen Anteil an polaren Substituenten, die für eine gute Hydrophobierung zumindest soweit abgespalten werden müssen, dass ein nicht mehr wasserlösliches hydrophobierendes Produkt entsteht, müssen hohe Mengen Hydrophobiermittel dosiert werden, um gute Effekte zu erhalten. Die Abspaltung der polaren Gruppen erfordert die Einstellung geeigneter Reaktionsbedingungen für die Hydrolyse und Kondensation, was die Verwendbarkeit dieser Produkte einschränkt.
In DE 102004056977 sowie in WO2006/097206 dienen ebenfalls flüssige, wasserlösliche oder selbstemulgierende Umsetzungsprodukte von Alkyltrihalogensilan oder Alkyltrialkoxysilan mit 2,0-2,99 Moläquivalenten Glykol (pro Moläquivalent Silan) gegebenenfalls in Kombination mit Basen (Alkali/Erdalkali-Oxide/Hydroxide) als Hydrophobierzusatz für wasserabweisende Gipsabmischungen oder zur hydrophobierenden Imprägnierung und Grundierung von mineralischen Stoffen, von Holz, Papier und Textilien.

In US 2441066 ist ein Prozess zur Umsetzung von Organohalogensilanen mit Verbindungen, die mindestens 2 alkoholische Hydroxylgruppen enthalten, beschrieben. Das Gewichtsverhältnis Silan:Polyalkohol reicht von 1,4:1 bis 3,3:1. Man erhält aus Di- und Trihalogensilanen überwiegend unlösliche Feststoffe. Die Produkte können als Imprägniermittel dienen.

Gegenstand der Erfindung ist ein Verfahren zur Herstellung von bei 20°C festen Organosiliciumverbindungen O, durch Umsetzung eines Moläquivalentes an Silan S, das ausgewählt wird aus Kohlenwasserstofftrihalogensilan, Kohlenwasserstofftrikohlenwasserstoffoxy-silan oder Gemischen davon oder deren Teilhydrolysate mit Polyhydroxyverbindungen P in einem solchen Molverhältnis, dass pro Moläquivalent Halogen- oder Kohlenwasserstoffoxyrest 0,3 bis 1,3 Moläquivalente Hydroxyreste vorliegen,
wobei gleichzeitig ein Wasseranteil zugegen ist, der mindestens ausreicht, die bei einer quantitativen Umsetzung der Polyhydroxyverbindung P noch theoretisch verbleibenden Halogen- oder Kohlenwasserstoffoxyreste zu hydrolysieren, aber 2 Moläquivalente pro Moläquivalent Halogen- oder Kohlenwasserstoffoxyrest nicht übersteigt,

Entgegen des oben zitierten Standes der Technik wurde gefunden, dass man durch die Umsetzung von 1 Moläquivalent an Silan S mit Polyhydroxyverbindungen P in einem Molverhältnis, bei dem pro Moläquivalent Halogen- oder Kohlenwasserstoffoxyrest 0,3 - 1,3 Moläquivalente Hydroxyreste vorliegen zu stabilen sehr gut hydrophobierenden Produkten gelangt. Dies ist umso überraschender, da diese festen Produkte nur eine geringe Wasserlöslichkeit aufweisen. Ihr Vorteil liegt darin, dass sie als Feststoffe in anwendungsfertigen Dry-Mix Baustoffmischungen eingesetzt werden können. Diese Organosiliciumverbindungen O sind effizienter, als z.B. die glykolfunktionellen Siloxane gemäß WO 2006/097206 (pro Halogen- oder Kohlenwasserstoffoxyrest liegen dort 1,33 - 1,93 Hydroxyreste vor), da die Mengen an polaren Gruppen, die zur Ausbildung der Hydrophobie abgespalten werden müssen, geringer und entsprechend im Gegenzug die Menge an hydrophobierend wirkendem Siloxananteil größer ist. Dadurch reduziert sich außerdem die Menge an flüchtigen organischen Bestandteilen, die bei Anwendung dieser Produkte abgespalten wird.

Vorzugsweise sind die Kohlenwasserstoffreste des Silans S gegebenenfalls substituierte $C_1$-$C_{15}$-Kohlenwasserstoffreste. Beispiele für die $C_1$-$C_{15}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Alkenylreste, wie der Vinyl- und der Allylrest; Cycloalkylreste, wie Cyclopentyl-, Cyclohexyl-, Cycloheptylres-te und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; Aralkylreste, wie der Benzylrest, der alpha- und der ß-Phenylethylrest. Beispiele für substituierte $C_1$-$C_{15}$-Kohlenwasserstoffreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest, sofern es sich bei Silan S um ein Kohlenwasserstoffoxy-Silan handelt mit Aminofunktionen substituierte Alkylreste wie der 3-Aminopropylrest, der N-Phenyl-aminomethylrest, der N-(2-Aminoethyl)-3-aminopropylrest, der N-Morpholinomethylrest, der N-Octyl-aminomethylrest, mit Thiolfunktionen substituierte Alkylreste wie der Thiopropylrest, mit Epoxyfunktionen substituierte Alkylreste wie der Glycidoxypropylrest, der Ethylcyclohexenoxidrest. Besonders bevorzugt sind die nicht substituierten $C_1$-$C_8$-Alkylreste, insbesondere der Methylrest und der Ethylrest.

Vorzugsweise sind die Kohlenwasserstoffoxyreste des Silans S $C_1$-$C_{15}$-Kohlenwasserstoffoxyreste. Beispiele für die $C_1$-$C_{15}$-Kohlenwasserstoffoxyreste sind die vorstehenden $C_1$-$C_{15}$-Kohlenwasserstoffreste, die über ein zweiwertiges Sauerstoffatom an das Siliciumatom gebunden sind. Besonders bevorzugt sind die nicht substituierten $C_1$-$C_3$-Alkylreste, insbesondere der Methylrest und der Ethylrest.

Vorzugsweise sind die Halogenreste des Silans S Chlorreste.

Das Silan S kann noch geringe Anteile, vorzugsweise höchstens 5 Mol-%, insbesondere höchstens 2 Mol-% an Silanen enthalten, die ausgewählt werden aus Dikohlenwasserstoffdihalogensilan, Trikohlenwasserstoffhalogensilan,

Tetrahalogensilan, Dikohlenwasserstoff-dikohlenwasserstoffoxy-silan, Trikohlenwasserstoff-kohlenwasserstoffoxy-silan und Tetrakohlenwasserstoffoxy-silan.

Das Silan S kann auch noch geringe Anteile, vorzugsweise höchstens 5 Mol-%, insbesondere höchstens 2 Mol-% an Siloxanen enthalten, die durch Hydrolyse aus dem Silan S entstehen.

Das Silan S kann auch noch geringe Anteile, vorzugsweise höchstens 5 Mol-%, insbesondere höchstens 2 Mol-% an Disilanen enthalten, z.B. aus Destillationsrückständen der Methylchlorsilanherstellung.

Neben Halogen- und Kohlenwasserstoffoxy-Resten kann das Silan S geringe Anteile, vorzugsweise höchstens 10 Mol-%, insbesondere höchstens 5 Mol-% Si-gebundenen Wasserstoff enthalten.

Bei der Polyhydroxyverbindung P handelt es sich vorzugsweise um ein lineares oder verzweigtes monomeres oder oligomeres $C_2$-$C_6$-Glykol, sowie Mischglykole, insbesondere $C_2$-$C_4$-Glykol mit insgesamt höchstens 40 Kohlenstoffatomen, vorzugsweise höchstens 25, insbesondere höchstens 15 Kohlenstoffatomen, um Tri-, Tetra-, Penta- und Hexahydroxyverbindungen mit 3 bis 12 Kohlenstoffatomen sowie um $C_2$-$C_{12}$-Hydroxycarbonsäuren.

Unter den Glykolen besonders bevorzugt sind Ethylenglykol oder dessen Oligomere, Propylenglykol oder dessen Oligomere sowie Mischglykole mit Propylenglykol und Ethylenglykoleinheiten verwendbar. Vorzugsweise weisen die Oligomere höchstens 6, insbesondere höchstens 3 Monomereinheiten auf. Beispiele für verzweigte oder lineare $C_2$-$C_{25}$-Glykolreste sind alpha, omegadihydroxyfunktionelle Glykole wie Ethylenglykol, Propylenglykol (=1,2-Propandiol), 1,3-Propandiol, 1,4-Butandiol, 1,5-Pentandiol, 1,6-Hexandiol, Neopentylglycol, Pinakol, Di-, Tri-und Tetraethylenglykol, Di-, tri- und Tetrapropylenglykol, alpha, omega-dihydroxyfunktionelle Mischglykole aus 1 - 5 Ethylenglykoleinheiten und 1 - 5 Propylenglykoleinheiten sowie Mischungen derselben und Bis-(hydroxymethyl)-harnstoff. Besonders bevorzugt sind Propylenglykol und Ethylenglykol, insbesondere Propylenglykol.

Unter den Tri-, Tetra-, Penta- und Hexahydroxyverbindungen mit 3 bis 12 Kohlenstoffatomen besonders bevorzugt sind lineare oder verzweigte Tri-, Tetra-, Penta- und Hexahydroxyverbindungen mit 3 bis 12 Kohlenstoffatomen. Beispiele sind Glycerin, 1,2,4-Butantriol, 1,1,1-Tris(hydroxymethyl)ethan, Pentaerythritol, meso-Erythritol, D-Mannitol, Saccharide wie D-(+)-Mannose, D-(+)-Glucose, D-Fructose. Desweiteren können auch deren Kondensationsprodukte, Di- und Polysaccharide wie D-(+)-Saccharose, Cyclodextrine, Cellulose und Stärke sowie ihre Derivate z.B. ihre Methyl-, Ethyl- und Hydroxyethyl-Derivate oder teil- oder vollverseifte Polyvinylacetate eingesetzt werden.

Unter den $C_2$-$C_{12}$-Hydroxycarbonsäuren, vorzugsweise $C_2$-$C_8$-Hydroxycarbonsäuren besonders bevorzugt sind aromatische und lineare oder verzweigte Hydroxyalkylcarbonsäuren, wie Salicylsäure, Mandelsäure, 4-Hydroxybenzoesäure, 2,4-Dihydroxybenzoesäure, 3,5-Dihydroxybenzoesäure, Glycolsäure, Milchsäure, 2,2-Bis-(hydroxymethyl)-propionsäure, Weinsäure, Zitronensäure, 3-Hydroxybuttersäure, 2-Hydroxyisobuttersäure, besonders bevorzugt sind lineare oder verzweigte Hydroxyalkylcarbonsäuren, insbesondere Milchsäure.

Vorzugsweise werden mindestens 0,5 Moläquivalente, besonders bevorzugt mindestens 0,7, insbesondere mindestens 0,9 und vorzugsweise höchstens 1,3, besonders bevorzugt höchstens 1,2 insbesondere höchstens 1,1 Hydroxylgruppen, stammend aus der Polyhydroxyverbindung P, pro Moläquivalent Halogen- oder Kohlenwasserstoffoxyrest in Silan S eingesetzt.

Vorzugsweise werden Silane S mit Kohlenwasserstoffoxy-Rest eingesetzt, besonders bevorzugt Alkyltrialkoxysilane. Beispiele sind Methyltrimethoxysilan, Ethyltrimethoxysilan, n-Propyltrimethoxysilan, Isopropyltrimethoxysilan, n-Butyltrimethoxysilan, 2-Methyl-1-propyltrimethoxysilan, 2-Butyltrimethoxysilan, Cyclohexyltrimethoxysilan, 2-Cyclohexyl-1-ethyltrimethoxysilan, n-Hexyltrimethoxysilan, Isohexyltrimethoxysilan, n-Heptyltrimethoxysilan, n-Octyltrimethoxysilan, Isooctyltrimethoxysilan, Decyltrimethoxysilan, Undecyltrimethoxysilan, Dodecyltrimethoxysilan, Hexadecyltrimethoxysilan.

Die Umsetzungen erfolgen nach gängigen Verfahren üblicherweise im Temperaturbereich von 0°C bis 200°C, vorzugsweise von 20°C bis 120°, indem eine Komponente z.B. das Silan S vorgelegt und die andere z.B. die Polyhydroxyverbindung P zudosiert wird oder durch Paralleldosierung der beiden Komponenten, was eine kontinuierliche Fahrweise erleichtert. Dabei können - insbesondere bei Einsatz von Feststoffen - Lösungsmittel verwendet werden. Zur Beschleunigung der Umsetzung insbesondere von Kohlenwasserstofftrikohlenwasserstoffoxy-silanen können Katalystoren wie Säuren (z.B. Salzsäure, Schwefelsäure, Essigsäure, Phosphorsäure, Ammoniumsalze) oder Basen (z.B. Natriummethanolat, Natriumhydroxid, Kaliumhydroxid, Kaliumfluorid) eingesetzt werden. Wird als Spaltprodukt Halogenwasserstoff freigesetzt, so kann dieser leicht gasförmig aus der Reaktionsmischung entfernt und einer Verwertung zugeführt werden. Bildet sich als Spaltprodukt Alkohol, so kann dieser einfach abdestilliert werden, sofern die Siedepunktsdifferenz zu den Reaktionspartnern dies zulässt, und ebenfalls einer Verwertung z.B. dem Wiedereinsatz als Rohstoff zur Herstellung des Kohlenwasserstofftrikohlenwasserstoffoxy-Silans, zugeführt werden.

Generell, aber vorzugsweise bei Einsatz substöchiometrischer Mengen OH bzgl. Halogen- oder Kohlenwasserstoffoxy-Rest in Silan S kann dem Reaktionsgemisch Wasser zugesetzt werden, um den Anteil restlicher Halogen- oder Kohlenwasserstoffoxy-Reste in der Organosiliciumverbindung O zu minimieren. Die über diese Verfahrensvariante zugänglichen festen Organosiliciumverbindungen O sind ebenfalls Gegenstand der Erfindung. Sie werden hergestellt durch Umsetzung eines Silans S obiger Bedeutung mit Polyhydroxyverbindungen P in einem Molverhältnis, bei dem pro Moläquivalent Halogen- oder Kohlenwasserstoffoxyrest 0,3 bis 1,3 Moläquivalente Hydroxyreste vorliegen, wobei

gleichzeitig ein Wasseranteil zugegen ist, der mindestens ausreicht, die bei einer quantitativen Umsetzung der Polyhydroxyverbindung P noch theoretisch verbleibenden Halogen- oder Kohlenwasserstoffoxyreste zu hydrolysieren, aber 2 Moläquivalente pro Moläquivalent Halogen- oder Kohlenwasserstoffoxyrest nicht übersteigt.

Zur Verbesserung des Wärmeübergangs wird vorzugsweise ein inertes Lösunsgmittel, insbesondere ausgewählt aus der Gruppe der Kohlenwasserstoffe wie Alkane, Aromaten, Alkylaromaten zugegeben. Insbesondere bevorzugt sind Stoffe oder Stoffgemische, die mit Wasser und/oder dem freigesetzten Alkohol ein Azeotrop bilden und somit die Abtrennung des Alkohols und/oder die Trocknung erleichtern.

In der Organosiliciumverbindung O liegen die Konzentrationen an verbliebenen Halogenresten vorzugsweise unter 1 Gew.-%, besonders bevorzugt unter 0,1 Gew.-%, die Konzentration der Kohlenwasserstoffoxy-Reste vorzugsweise unter 35 Mol-%, besonders bevorzugt unter 25 Mol-% insbesondere unter 10 Mol-% bezogen auf Mol Si.

Bei Einsatz von Kohlenwasserstofftrikohlenwasserstoffoxy-Silan als Silan S und einer Hydroxycarbonsäure als Polyhydroxyverbindung P kann sich während der Umsetzung aus dem freiwerdenden Alkohol und der Säure ein Ester bilden. In diesem Fall entspricht die eingesetzte Stöchiometrie der Reaktionspartner nicht exakt dem Molverhälnis in der Organosiliciumverbindung O. Dies findet jedoch nur in untergeordnetem Maß statt und kann, insbesondere wenn das Eigenschaftsprofil die Anwendung beeinträchtigt, durch entsprechende Anpassung der Molverhältnisse der Einsatzstoffe ausgeglichen werden. Der gegebenenfalls gebildete Ester kann entweder beim Trocknungsprozess abdestilliert werden oder er verbleibt in der Reaktionsmischung. Die Esterbildung kann durch Variation der Reaktionsbedingungen z.B. Temperatur, Druck zurückgedrängt werden. Um die Konzentration des freigesetzten Alkohols in der Reaktionsmischung niedrig zu halten, wird die Umsetzung vorzugsweise bei vermindertem Druck und/oder erhöhter Temperatur durchgeführt, sodass der Alkohol permanent aus dem Gleichgewicht entzogen wird.

Auch unvollständiger Umsatz führt zu einer Veränderung der Molverhältnisses in der Organosiliciumverbindung O gegenüber dem Einsatzverhältnis der Edukte. Dies lässt sich bei Bedarf durch Veränderung der Reaktionsbedingungen, wie Molverhältnisse, Temperatur, Reaktionsdauer vom Fachmann einfach korrigieren.

Aus Organosiliciumverbindungen O werden in der Anwendung im Substrat Siliconharznetzwerke gebildet, die zu der ausgeprägten Hydrophobie führen. Vorzugsweise werden mit den Organosiliciumverbindungen O und den zu hydrophobierenden Substraten Baustoffmischungen hergestellt, die vorzugsweise pulverförmig sind. Vorzugsweise basieren die Baustoffmischungen auf Zement und /oder Gips. Diese Baustoffmischungen werden vorzugsweise vor Ort auf Baustellen verarbeitet. Zu den Baustoffmischungen zählen beispielsweise Innen- und Außenputze, Spachtelmassen, zementbasierende Kleber, wie Fliesenkleber und andere Kleber, Estriche, Stuckgips.

Die Organosiliciumverbindungen O können aber auch zur hydrophoben Ausstattung von Fertigartikeln verwendet werden, indem sie der Rohmischung beim Herstellprozess zugegeben werden. Beispiele dazu sind Bandstraßengips insbesondere zur Herstellung von Gipskartonplatten, Gipsfaserplatten, Zementfaserplatten, Fassadenelemente, Gipswandpaneele. Besonders bevorzugt ist der Einsatz in gipsbasierten Baustoffen. Die Organosiliciumverbindungen O sind sehr effiziente Hydrophobiermittel und bewirken bereits in Anteilen von unter einem Gewichtsprozent an der Baustoffmischung eine Verringerung der Wasseraufnahme auf unter 5 Gew.-%. DIN EN 520.

Die festen Organosiliciumverbindungen O können entweder als reine Substanz zur Massehydrophobierung eingesetzt werden, oder sie werden in Zubereitungen zusammen mit anderen Komponenten verwendet. Vorzugsweise werden sie als Feststoff in den zu hydrophobierenden festen Baustoff eingemischt (Dry-Mix-Anwendung). Ihre Wirksamkeit entfalten sie beim Anmischen mit Wasser unmittelbar vor der Verarbeitung. Bei den Zubereitungen handelt es sich im einfachsten Fall um wässrige zement- oder gipsbasierte Dispersionen oder Suspensionen, sowie gipsbasierte Slurrys in Herstellprozessen von Gipsartikeln, die mindestens eine Organosiliciumverbindung O und Wasser umfassen. Solche Zubereitungen können auch die üblicherweise verwendeten Hydrophobiermittel enthalten, wie die in den vorstehend zitierten Schriften wiedergebenen Silane, Siloxane, Siliconate und Silikate, auch gegebenenfalls zusätzliche Emulgatoren.

Wässrige, nicht wässrige oder lösemittelbasierende Zubereitungen werden erhalten, indem man die Organosiliciumverbindungen O mit anderen Bestandteilen kombiniert, wobei diese Kombinationen nicht zwangsläufig homogene Mischungen ergeben.

Mögliche Komponenten, die zur Herstellung von Zubereitungen zur Ausführung des erfindungsgemäßen Verfahrens dienen können sind zum Beispiel

- H-Siloxan,
- Alkoxy- und Aryloxysilane, die zusätzlich organofunktionelle Reste oder Alkyl- oder Arylreste aufweisen können, sowie die daraus erhältlichen Hydrolysate und Kondensate sowie Gemische derselben,
- Alkyl oder Arylsiliconate,
- Natrium- oder Kalium-Wasserglas
- Polydimethlysiloxanöle, die anstelle einer oder mehrerer Methylgruppen andere organische Gruppen tragen können, wie andere Kohlenwasserstoffreste als Methylresten, wobei in diesen Kohlenwasserstoffresten durch den Einbau von Heteroatomen wie S, N, 0, P, etc. die Kohlenstoffkette unterbrochen sein kann, oder auch organische Funktionalitäten beinhaltet sein können,

- Siliconharze,
- eines oder mehrere organische Lösemittel, wie aromatische Lösemittel, Ketone, Ester, Alkohole, aliphatische und cycloaliphatische Lösemittel, ionische Flüssigkeiten und Glykole,
- Wasser,
- organische Tenside,
- organische Polymere, wie Polyvinylalkohol, Polyvinylacetat, Polyacrylate, Styrolacrylatcopolymere, Polyvinylbutyrale, Polyurethane und Polyepoxide,
- lineare und verzweigte gegebenenfalls organisch funktionalisierte polyhydroxylierte Kohlenwasserstoffe, wie Ethylenglykol, Diethylenglykol, Propylenglykol, Dipropylenglykol, und höhere Glykole, Zucker wie Glykosen, Mannosen und Hexosen,
- Zement
- Gips
- Kalk

oder Kombinationen aus den aufgezählten Komponenten, wobei außer den hier aufgezählten Komponenten auch weitere, wie sie zur Herstellung von Baustoffzubereitungen eingesetzt werden können.
Dabei ist es nicht unbedingt erforderlich, dass sich die zu mischenden Komponenten zu einem homogenen einheitlichen Wirkstoffgemisch verarbeiten lassen. Gegebenenfalls können mehrphasige Gemische aus mehreren flüssigen Phasen oder aus festen und flüssigen Phasen entstehen, wobei die Konsistenz der erhaltenen Produkte sowohl niederviskos flüssig als auch pastös oder cremeförmig oder auch pulverfömig fest sein kann. Vorzugsweise sind die Zubereitungen pastös oder fest, besonders bevorzugt fest.

Die Organosiliciumverbindungen 0 sind nicht basisch, der pH-Wert beträgt kleiner 10. Deshalb können mit den Organosiliciumverbindungen 0 Zubereitungen zur Hydrophobierung von Baustoffen erhalten werden, die nicht basisch sind. Nicht basisch bedeutet, die Zubereitungen erreichen in Kontakt mit Wasser einen pH-Wert von kleiner 10.

Zur Hydrophobierung basischer Baustoffe wie etwa Faserzement, Beton, basischen Gipsen etc. ist es nicht erforderlich, dass die Zubereitungen selbst einen basischen Aktivator enthalten. In neutralen Substraten wie Gips kann zur raschen Ausbildung der Hydrophobie ein basischer Aktivator dienen. Dabei kann die basische Komponente in die Zubereitung selbst eingearbeitet werden, wobei sie gegebenenfalls in der Zubereitung so maskiert wird, dass sie erst in der späteren Anwendung freigesetzt wird oder sie wird ohne weiteres in die Zubereitung eingesetzt, wenn dadurch die Verwendbarkeit der Zubereitung nicht eingeschränkt wird. Die basische Komponente muss dabei selbst keine hydrophobierende Wirkung besitzen. Sie wird nur in katalytischen Mengen benötigt. Übliche Einsatzmengen der basischen Komponente zur Aktivierung liegen im Bereich von 0,01 - 5,0 Gewichtsprozent bezogen auf Masse der eingesetzten Organosiliciumverbindung O und wird ausgewählt je nachdem wie rasch die Ausbildung der Hydrophobie erwünscht ist, beziehungsweise wie stark die katalytische Wirkung der jeweiligen Komponente ausgeprägt ist. Beispiele für basische Aktivatoren sind gebrannter oder gelöschter Kalk, Alkali- oder Erdalkalihydroxide, Zemente, organische Aminverbindungen, Alkalisilicate und Alkalisiliconate. Ebenfalls sind saure Aktivatoren anwendbar, so z.B. organische Carbonsäuren oder Ammoniumverbindungen.

Vorzugsweise werden die Zubereitungen als wässrige Zubereitung, als Dispersion oder Suspension verwendet. Zur Herstellung wässriger Zubereitungen können Tenside verwendet werden oder sie können ohne Zugabe von Tensiden hergestellt werden, indem die Organosiliciumverbindungen O direkt in Wasser eingebracht werden. Die Herstellung von wässrigen Zubereitungen ohne die Verwendung von Tensiden ist insbesondere dann möglich, wenn die Organosiliciumverbindungen O in Wasser selbstemulgierend sind.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) durchgeführt.

**Herstellungsbeispiel 1: Umsetzungsprodukt aus Methyltrimethoxysilan und Propylenglykol (Propan-1,2-diol) (1:1,5 => (Propylenglykol)OH : MeO = 1,0)**

In einem mit Stickstoff inertisierten 500 ml-5-Hals-Rundkolben mit Flügelrührer, Tropftrichter, Thermometer und Wasserabscheider mit Rückflusskühler wird eine Lösung von 50 g (0,36 mol) Methyltrimethoxysilan (käuflich erhältlich bei Wacker Chemie AG) in 100 g Isopar E (isoparaffines Kohlenwasserstoffgemisch mit einem Siedebereich von 113 - 143°C, käuflich erhältlich bei ExxonMobil) zum Rückfluss erhitzt. Der Wasserabscheider wird mit Isopar E randvoll befüllt. Unter Rühren werden 41,2 g (0,54 mol) Propylenglykol (= 1,2-Propandiol, käuflich erhältlich bei Sigma Aldrich) binnen 16 Minuten zudosiert. Man erhitzt die Mischung für 30 Minuten auf Rückfluss. Dabei sinkt der Siedepunkt

von 90°C auf 77°C. Das Destillat trennt sich als untere Phase im Wasserabscheider ab. Bis zu einer Siedetemperatur von 118°C sammeln sich 42,9 g klares farbloses Destillat, das nach gaschromatografischer Analyse 71,4 % Methanol, 4,5 % Methyltrimethoxysilan und 21,2 % Isopar E enthält. Berücksichtigt man die zurückgewonnene Menge an Methyltrimethoxysilan, so wurden 91% der Methoxyreste im Methyltrimethoxysilan abgespalten, das Molverhältnis Silan/Glykol beträgt demnach 1:1,56. Während der Destillation scheidet sich ein pastöser weißer Feststoff in der Reaktionsmischung ab, der anschließend im Kolben bei 100°C/5 mbar bis zur Gewichtskonstanz getrocknet wird. Man isoliert 51 g feines, weißes, rieselfähiges Pulver, dessen Feststoffgehalt bei 55% liegt (bestimmt mit der Festgehaltswaage HR73 Halogen Moisture Analyzer von Mettler Toledo bei 160°C).
Es wird eine 10%ige Suspension in Wasser hergestellt (1g Feststoff in 9 g Wasser), bei 22°C ca. 10 Minuten gerührt und über ein 5μm Filter filtriert. Der nach o.g. Methode bestimmte Feststoffgehalt des Filtrats liegt bei 0,34% (5% des Feststoffs haben sich somit gelöst).

**Herstellungsbeispiel 2: Umsetzungsprodukt aus Methyltrimethoxysilan, Glycerin (Propan-1,2,3-triol) und Wasser (1:0,5:1 => (Glycerin)OH : OMe = 0,5)**

In einem mit Stickstoff inertisierten 500 ml-5-Hals-Rundkolben mit Flügelrührer, Tropftrichter, Thermometer und Rückflusskühler wird eine Mischung aus 69,3 g (0,5 mol) Methyltrimethoxysilan (käuflich erhältlich bei Wacker Chemie AG) und 100 g Methanol auf Rückfluss erhitzt. Unter Rühren dosiert man binnen 10 Minuten eine Lösung von 23,3 g (0,25 mol) Glycerin (käuflich erhältlich bei Aldrich) und 4,5 g (0,25 mol) demineralisiertem Wasser. Die Mischung wird eine Stunde auf Rückfluss (66°C) gehalten. Danach baut man einen Wasserabscheider zwischen Kolben und Rückflusskühler ein und befüllt ihn mit Cyclohexan (käuflich erhältlich bei Merck). Man fügt der Mischung 185 g Cyclohexan zu und erhitzt zum Sieden (75°C). Das Destillat trennt sich im Wasserabscheider in eine obere und eine untere Phase auf. Insgesamt fallen 188,7 g untere Phase an. Nach der gaschromatografischen Analyse enthält sie 63,6 % Methanol, 2,7 % Methyltrimethoxysilan und 33,6 % Cyclohexan. Dem Rückstand werden 160 g Cyclohexan, 4,5 g (0,25 mol) demineralisiertes Wasser und 0,2 g konzentrierte Salzsäure zugefügt. Man erhitzt am Wasserabscheider zum Rückfluss (79°C).

Das Destillat trennt sich im Wasserabscheider in eine obere und eine untere Phase auf. Insgesamt fallen 16 g untere Phase an. Nach der gaschromatografischen Analyse enthält sie 83 % Methanol, 9,1 % Wasser und 7,8 % Cyclohexan. Berücksichtigt man die zurückgewonnene Menge an Methyltrimethoxysilan so wurden 75% der Methoxyreste im Methyltrimethoxysilan abgespalten, das Molverhältnis Silan/Glycerin beträgt demnach 1:0,54. Während der Destillation bildet die Reaktionsmischung eine weiße Suspension, die bei 100°C/1hPa zur Trockne eingedampft wird. Man isoliert 48,7 g feines, weißes, rieselfähiges Pulver, dessen Feststoffgehalt bei 80,2% liegt (bestimmt mit der Festgehaltswaage HR73 Halogen Moisture Analyzer von Mettler Toledo bei 160°C).
Es wird eine 10%ige Suspension in Wasser hergestellt (1g Feststoff in 9 g Wasser), bei 22°C ca. 10 Minuten gerührt und über ein 5μm Filter filtriert. Der nach o.g. Methode bestimmte Feststoffgehalt des Filtrats liegt bei 1,9% (23% des Feststoffs haben sich somit gelöst.)
Die Elementaranalyse des Feststoffs ergibt 23,2% Si, 28% C, 6,5% H, worauf beispielsweise annähernd folgende Formel zutrifft:

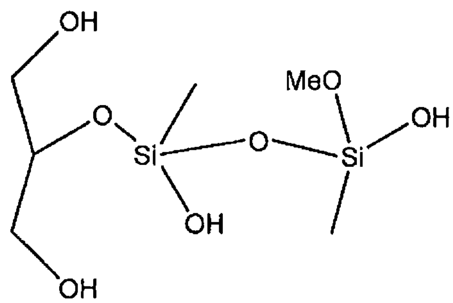

**Herstellungsbeispiel 3: Umsetzungsprodukt aus Methyltrimethoxysilan, Milchsäure (2-Hydroxypropionsäure) und Wasser (1:1,5:1,3 => (Milchsäure) OH : MeO = 1,0)**

In einem mit Stickstoff inertisierten 500 ml-5-Hals-Rundkolben mit Flügelrührer, Tropftrichter, Thermometer und Wasserabscheider mit Rückflusskühler werden 50 g (0,36 mol) Methyltrimethoxysilan (käuflich erhältlich bei Wacker Chemie AG) und 100 g Isopar E (isoparaffines Kohlenwasserstoffgemisch mit einem Siedebereich von 113 - 143°C, käuflich erhältlich bei ExxonMobil) bei 50°C vorgelegt. Der Wasserabscheider wird mit Isopar E randvoll befüllt. Unter Rühren werden 56,7 g (0,54 mol) Milchsäure (85%ig, käuflich erhältlich bei Sigma, enthält 8,5 g (0,47 mol) Wasser)

binnen 11 Minuten zudosiert. Die Mischung erwärmt sich dabei auf 62°C. Man erhitzt eine halbe Stunde auf Rückfluss, danach wird Destillat abgenommen, welches sich im Wasserabscheider in 2 flüssige Phasen auftrennt. Bis zu einer Siedetemperatur von 116°C sammeln sich 48,5 g klares farbloses Destillat als untere Phase, das nach gaschromatografischer Analyse 60,9 % Methanol, 10 % Milchsäure, 25,6% Milchsäuremethylester und 3,2 % Isopar E enthält. Demnach wurden 96% der im Methyltrimethoxysilan vorhandenen Methoxyreste als Methanol oder Milchsäuremethylester abgespalten. Während der Destillation fällt in der Reaktionsmischung ein weißer Feststoff aus. Nach Abziehen der flüchtigen Bestandteile, werden 52,2 g feines, weißes, rieselfähiges Pulver erhalten, dessen Feststoffgehalt bei 60% liegt (bestimmt mit der Festgehaltswaage HR73 Halogen Moisture Analyzer von Mettler Toledo bei 160°C). Aus Destillatmenge und -zusammensetzung ergibt sich ein Molverhältnis $MeSiO_{3/2}$ : Milchsäure von 1 : 1 d.h. (Milchsäure) OH : MeSi = 0,67. Laut Elementaranalyse enthält das Pulver 18,9 Gew.-% Silicium, was gut auf folgende mittlere Formel passt:

$$MeSi(O_{2/2})(OH)(CH_3CH(O_{1/2})COO_{1/2}).$$

Es wird eine 10%ige Suspension in Wasser hergestellt (1g Feststoff in 9 g Wasser), bei 22°C ca. 10 Minuten gerührt und über ein 5µm Filter filtriert. Der nach o.g. Methode bestimmte Feststoffgehalt des Filtrats liegt bei 2,47% (35% des Feststoffs haben sich somit gelöst).

**Herstellungsbeispiel 4: Umsetzungsprodukt aus Methyltrimethoxysilan, Glycerin (Propan-1,2,3-triol) und Wasser (1:0,33:2 => (Glycerin)OH : MeO = 0,33)**

In einem mit Stickstoff inertisierten 500 ml-5-Hals-Rundkolben mit Flügelrührer, Tropftrichter, Thermometer und Rückflusskühler wird eine Mischung aus 69,3 g (0,5 mol) Methyltrimethoxysilan (käuflich erhältlich bei Wacker Chemie AG) und 100 g Methanol auf Rückfluss erhitzt. Unter Rühren dosiert man binnen 10 Minuten eine Lösung aus 15,3 g (0,165 mol) Glycerin (käuflich erhältlich bei Aldrich) und 18 g (1 mol) demineralisiertem Wasser. Die Mischung wird zwei Stunden auf Rückfluss (67°C) erhitzt. Danach baut man einen Wasserabscheider zwischen Kolben und Rückflusskühler ein und befüllt ihn mit Isopar E (isoparaffines Kohlenwasserstoffgemisch mit einem Siedebereich von 113 - 143°C, käuflich erhältlich bei ExxonMobil). Man fügt der Mischung 208 g Isopar E zu und erhitzt zum Sieden. Das Destillat trennt sich im Wasserabscheider in eine obere und eine untere Phase auf. Bis zu einer Siedetemperatur von 119°C fallen 179,5 g untere Phase an. Nach der gaschromatografischen Analyse enthält sie 88,4 % Methanol, 7,4 % Isopar E und 4,2 % Wasser. Demnach wurden die Methoxyreste quantitativ abgespalten. Während der Destillation bildet die Reaktionsmischung eine weiße Suspension, die bei 100°C/1hPa zur Trockne eingedampft wird. Man isoliert 53,3 g feines, weißes, rieselfähiges Pulver, dessen Feststoffgehalt bei 83,3% liegt (bestimmt mit der Festgehaltswaage HR73 Halogen Moisture Analyzer von Mettler Toledo bei 160°C).
Es wird eine 10%ige Suspension in Wasser hergestellt (1g Feststoff in 9 g Wasser), bei 22°C ca. 10 Minuten gerührt und über ein 5µm Filter filtriert. Der nach o.g. Methode bestimmte Feststoffgehalt des Filtrats liegt bei 0,28% (3,3% des Feststoffs haben sich somit gelöst).

**Herstellungsbeispiel 5: Umsetzungsprodukt aus Methyltrimethoxysilan, Milchsäure (2-Hydroxypropionsäure) und Wasser (1:0,95:1,5 => (Milchsäure) OH : MeO = 0,63)**

In einem auf 60°C mittels Ölbad temperierten 500 ml-5-Hals-Rundkolben mit Flügelrührer, zwei Tropftrichtern, Thermometer und Destillationsaufsatz wird mit Hilfe einer Vakuumpumpe ein Druck von 300 hPa eingestellt. Eine Lösung aus 35,9 g (0,34 mol) Milchsäure (85%ig, käuflich erhältlich bei Sigma, enthält 5,4 g (0,3 mol) Wasser) und 4,4 g (0,24 mol) Wasser wird parallel mit 50 g (0,36 mol) Methyltrimethoxysilan (käuflich erhältlich bei Wacker Chemie AG) unter Rühren aus den beiden Tropftrichtern binnen 45 Minuten in den Kolben dosiert. Die flüchtigen Bestandteile sammeln sich dabei in der Vorlage, während der Rückstand zunehmend zäher wird. Nach beendeter Dosierung wird für eine Stunde bei vollem Vakuum (5 hPa) getrocknet. Man isoliert 37,4 g klares farbloses Destillat, das nach gaschromatografischer Analyse 91,3 % Methanol (= 98,5 % der theoretischen Menge), 4,1 % Milchsäuremethylester (= 4,3 % der eingesetzten Milchsäure) und 4,1 % Wasser enthält und als Rückstand 52,3 g feinkörniges weißes Pulver dessen Feststoffgehalt bei 57,6% liegt (bestimmt mit der Festgehaltswaage HR73 Halogen Moisture Analyzer von Mettler Toledo bei 160°C). Aus Destillatmenge und -zusammensetzung ergibt sich ein Molverhältnis $MeSiO_{3/2}$ : Milchsäure von 1 : 0,91 d.h. (Milchsäure) OH : MeSi = 1,1.

In den folgenden **Anwendungsbeispielen** wurden marktübliche Gipsputze oder Gipsspachtelmassen in Pulverform (Goldband Fertigputzgips Leicht, Maschinenputzgips MP 75 und Spachtelmasse Uniflott der Firma Knauf Gips KG, Iphofen/Deutschland) mit variierenden Mengen der Organo-siliciumverbindungen O aus den zuvor beschriebenen Herstellungsbeispielen in trockener Form effektiv vermischt. Anschließend wurden diese Trockenmischungen gemäß der auf der Packung angegebenen Rezeptur unter Rühren portionsweise zum Anmachwasser gegeben und mit einem elektrisch betriebenen Flügelrührer bei moderater Drehzahl zu einem homogenen Slurry verrührt (Goldband Fertigputz

Leicht: 300 g Gipspulver und 200 g Wasser, Maschinenputz MP 75: 300 g Gipspulver und 180 g Wasser, Spachtelmasse Uniflott: 300 g Gipspulver und 180 g Wasser - jeweils gemäß Packungsangabe). Anschließend wurde der erhaltene Slurry in PVC-Ringe (Durchmesser: 80 mm, Höhe 20 mm) gegossen und der Gips bei 23 °C und 50 % relativer Luftfeuchte über 24 Stunden ausgehärtet. Nach der Entschalung der Gipsprüfkörper aus den Ringen wurde in einem Umlufttrockenschrank bei 40 °C bis zur Gewichtskonstanz der Prüfkörper getrocknet. Zur Bestimmung der Wasseraufnahme in Anlehnung an DIN EN 520 wurden die Prüfkörper nach Bestimmung des Trockengewichts für 120 min unter Wasser gelagert, wobei die Proben horizontal auf Metallgitter gelegt wurden und der Wasserüberstand über dem höchsten Punkt der Prüfkörper 5 mm betrug. Nach 120 min wurden die Prüfkörper aus dem Wasser genommen, auf einem mit Wasser gesättigten Schwamm abgetropft und aus dem Nassgewicht sowie dem Trockengewicht die prozentuale Wasseraufnahme gemäß der Formel

$$\text{Prozentuale Wasseraufnahme} = \{[\text{Masse(nass)} - \text{Masse(trocken)}]/\text{Masse(trocken)}\} \cdot 100\ \%$$

errechnet.

**Anwendungsbeispiel 1: Hydrophobierung einer Gips-Spachtelmasse (Knauf UNIFLOTT®) mit einem Umsetzungsprodukt aus Methyltrimethoxysilan und Propylenglykol 1:1,5 (Produkt aus Herstellungsbeispiel 1).**

Tabelle 1 zeigt, dass mindestens ab einer Dosierung von 0,6 Gew.-% die Grenze von 5 Gew.-% Wasseraufnahme bei den beiden Gipsputzen unterschritten wird. Das Produkt aus Herstellungsbeispiel 1 eignet sich jedoch besonders für Gipsspachtelmassen - hier wird die Grenze von 5 Gew.-% Wasseraufnahme bereits bei der geringsten Dosierung von 0,2 Gew.-% unterschritten.

**Anwendungsbeispiel 2: Hydrophobierung zweier Gipsputze mit einem Umsetzungsprodukt aus Methyltrimethoxysilan, Glycerin (Propan-1,2,3-triol) und Wasser 1:0,5:1 (Produkt aus Herstellungsbeispiel 2).**

Tabelle 1 zeigt, dass ein Umsetzungsprodukt aus Methyltrimethoxysilan, Glycerin und Wasser Gipsputze ebenfalls sehr effizient hydrophobiert. 5 Gew.-% Wasseraufnahme werden hier bereits bei 0,4 % Dosierung unterschritten.

**Anwendungsbeispiel 3: Hydrophobierung zweier Gipsputze mit einem Umsetzungsprodukt aus Methyltrimethoxysilan, Milchsäure (2-Hydroxypropionsäure) und Wasser 1:1,5:1,3 (Produkt aus Herstellungsbeispiel 3).**

Ein Umsetzungsprodukt von Methyltrimethoxysilan mit Milchsäure und Wasser zeigt sich als sehr effizientes und besonders effektives Hydrophobiermittel in den zwei verschiedenen Gipsputzen. Wie Tabelle 1 zu entnehmen ist, werden in diesem Beispiel 2 % Wasseraufnahme bereits ab 0,2 Gew.-% Dosierung in Abhängigkeit des verwendeten Gipsputzes unterschritten.

**Anwendungsbeispiel 4: Hydrophobierung zweier Gipsputze mit einem Umsetzungsprodukt aus Methyltrimethoxysilan, Glycerin (Propan-1,2,3-triol) und Wasser 1:0,33:2 (Produkt aus Herstellungsbeispiel 4).**

Beim Herstellungsbeispiel 4 kam im Vergleich zu Herstellungsbeispiel 2 eine reduzierte Einsatzmenge an Glycerin zum Einsatz. Die Effizienz der Hydrophobierung ist geringer als in Anwendungsbeispiel 2 - 5 Gew.-% Wasseraufnahme werden im Falle des Handputzes selbst bei 0,6 % Dosierung nicht unterschritten.

**Anwendungsbeispiel 5 (Vergleichsbeispiel, nicht erfindungsgemäß):** Ein Vergleich mit dem gängigen Dry-Mix-Hydrophobieradditiv SILRES® PULVER G (Wacker Chemie AG) macht den Unterschied zu derzeit handelsüblichen Produkten deutlich. 10 % kapillare Waaseraufnahme werden beim Gipshandputz erst durch Dosierung von 1,4 % SILRES® PULVER G erreicht, 5 % kapillare Wasseraufnahme werden durch 1,6 % SILRES® PULVER G unterschritten.

**Anwendungbeispiel 6 Hydrophobierung eines Gipsputzes mit einem Umsetzungsprodukt aus Methyltrimethoxysilan, Milchsäure (2-Hydroxypropionsäure) und Wasser 1:0,95:1,5 (Produkt aus Herstellungsbeispiel 5)**

Beim Herstellungsbeispiel 5 kam im Vergleich zu Herstellungsbeispiel 3 eine reduzierte Einsatzmenge an Milchsäure zum Einsatz. Die Effizienz der Hydrophobierung ist geringer als in Anwendungsbeispiel 3: 5 Gew.-% Wasseraufnahme werden im Falle des Handputzes erst bei 0,6 % Dosierung unterschritten.

In Tabelle 1 ist die Wasseraufnahme von Gipsprüfkörpern in Anlehnung an DIN EN 520 angegeben

Tabelle 1

| Additiv aus Herstellungsbeispiel | WASSERAUFNAHME IN GEW.-% (Dosierung in Gew.-% in Klammern) | | |
|---|---|---|---|
| | Testsubstrat: Gipspachtelmasse Knauf Uniflott | Testsubstrat: Kalk-Gipsmaschinenputz Knauf MP 75 | Testsubstrat: Kalk-Gipshandputz Knauf Goldband |
| unbehandelt (ohne Additiv) | 16,3 (0,0) | 39,9 (0,0) | 36,3 (0,0) |
| 1 | 4,9 (0,2) | 30,7 (0,2) | 22,0 (0,2) |
| | 2,8 (0,4) | 14,3 (0,4) | 12,7 (0,4) |
| | 2,2 (0,6) | 2,2 (0,6) | 3,0 (0,6) |
| 2 | | 7,3 (0,2) | 12,7 (0,2) |
| | | 2,1 (0,4) | 4,3 (0,4) |
| | | 2,2 (0,6) | 1,5 (0,6) |
| 3 | | 1,7 (0,2) | 5,8 (0,2) |
| | | 2,0 (0,4) | 1,1 (0,4) |
| | | 2,1 (0,6) | 1,1 (0,6) |
| 4 | | 21,8 (0,2) | 36,3 (0,2) |
| | | 4,7 (0,4) | 29,6 (0,4) |
| | | 2,2 (0,6) | 6,7 (0,6) |
| 5* | | | 10,7 (1,4) |
| | | | 3,2 (1,6) |
| | | | 1,6 (1,8) |
| 6 | | | 34,9 (0,2) |
| | | | 17,1 (0,4) |
| | | | 1,5 (0,6) |

*nicht erfindungsgemäß

**Patentansprüche**

1. Verfahren zur Herstellung von bei 20°C festen Organosiliciumverbindungen O, durch Umsetzung eines Moläquivalentes an Silan S, das ausgewählt wird aus Kohlenwasserstofftrihalogensilan, Kohlenwasserstofftrikohlenwasserstoffoxy-silan oder Gemischen davon oder deren Teilhydrolysate mit Polyhydroxyverbindungen P in einem solchen Molverhältnis, dass pro Moläquivalent Halogen- oder Kohlenwasserstoffoxyrest 0,3 bis 1,3 Moläquivalente Hydroxyreste vorliegen,
wobei gleichzeitig ein Wasseranteil zugegen ist, der mindestens ausreicht, die bei einer quantitativen Umsetzung der Polyhydroxyverbindung P noch theoretisch verbleibenden Halogen- oder Kohlenwasserstoffoxyreste zu hydrolysieren, aber 2 Moläquivalente pro Moläquivalent Halogen- oder Kohlenwasserstoffoxyrest nicht übersteigt.

2. Organosiliciumverbindungen O, erhältlich nach dem Verfahren gemäss Anspruch 1.

3. Verwendung der Organosiliciumverbindungen O gemäß Anspruch 2 zur Massehydrophobierung von Substraten.

4. Verfahren nach Anspruch 1, bei dem die Kohlenwasserstoffreste des Silans S substituierte oder nichtsubstituierte $C_1$-$C_{15}$-Kohlenwasserstoffreste sind.

5. Verfahren nach Anspruch 1 oder 4, bei dem die Kohlenwasserstoffoxyreste des Silans S nicht substituierte $C_1$-$C_3$-Alkylreste sind.

6. Verfahren nach Anspruch 1, 4 oder 5, bei dem die Halogenreste des Silans S Chlorreste sind.

7. Verfahren nach Anspruch 1, 4, 5 oder 6, bei dem die Polyhydroxyverbindung P ausgewählt wird aus linearem oder verzweigtem monomerem oder oligomerem $C_2$-$C_6$-Glykol, sowie Mischglykolen, aus Tri-, Tetra-, Penta- und Hexahydroxyverbindungen mit 3 bis 12 Kohlenstoffatomen sowie aus $C_2$-$C_{12}$-Hydroxycarbonsäuren.

**8.** Verwendung nach Anspruch 3, bei der die Organosiliciumverbindungen O zur hydrophoben Ausstattung von Fertigartikeln verwendet werden, indem sie der Rohmischung beim Herstellprozess zugegeben werden.

**9.** Verwendung nach Anspruch 3 oder 8, bei dem die Organosiliciumverbindungen O als Feststoff in den zu hydrophobierenden festen Baustoff eingemischt werden.

**10.** Baustoffmischungen, enthaltend Organosiliciumverbindungen O herstellbar nach dem Verfahren gemäß Anspruch 1, 4, 5, 6 oder 7 und die zu hydrophobierenden Substrate.

**11.** Baustoffmischungen nach Anspruch 10, bei dem die zu hydrophobierenden Substrate ausgewählt werden aus Zement, Gips und deren Mischungen.

**12.** Baustoffmischungen nach Anspruch 10 oder 11, die ausgewählt werden aus Innen- und Außenputzen, Spachtelmassen, Klebern, Estrichen und Stuckgips.

## Claims

**1.** Process for preparing organosilicon compounds O which are solid at 20°C, by reaction of a molar equivalent of silane S which is selected from hydrocarbyltrihalosilane, hydrocarbyltrihydrocarbyloxysilane, or mixtures thereof, or their partial hydrolysates with polyhydroxy compounds P, in a molar ratio such that per mol equivalent of halo or hydrocarbyloxy radical there are 0.3 to 1.3 mol equivalents of hydroxyl radicals present,
there being present at the same time a water fraction which is at least sufficient to hydrolyze the halo or hydrocarbyloxy radicals still remaining theoretically on quantitative conversion of the polyhydroxy compound P, but not exceeding 2 mol equivalents per mol equivalent of halo or hydrocarbyloxy radical.

**2.** Organosilicon compounds 0 obtainable by the process according to Claim 1.

**3.** Use of the organosilicon compounds O according to Claim 2 for the body hydrophobization of subtrates.

**4.** Process according to Claim 1, wherein the hydrocarbyl radicals of the silane S are substituted or unsubstituted $C_1$-$C_{15}$ hydrocarbyl radicals.

**5.** Process according to Claim 1, or 4, wherein the hydrocarbyloxy radicals of the silane S are unsubstituted $C_1$-$C_3$ alkyl radicals.

**6.** Process according to Claim 1, 4, or 5, wherein the halo radicals of the silane S are chloro radicals.

**7.** Process according to Claim 1, 4, 5, or 6, wherein the polyhydroxy compound P is selected from linear or branched monomeric or oligomeric $C_2$-$C_6$ glycol, and also from mixed glycols, from tri-, tetra-, penta-, and hexa-hydroxy compounds having 3 to 12 carbon atoms, and also from $C_2$-$C_{12}$ hydroxycarboxylic acids.

**8.** Use according to Claim 3, wherein the organosilicon compounds O are used for the hydrophobic treatment of finished articles, by being added to the crude mixture during the production operation.

**9.** Use according to Claim 3, or 8, wherein the organosilicon compounds O are mixed as solid material into the solid building material to be hydrophobized.

**10.** Building material mixtures comprising organosilicon compounds O preparable by process according to Claim 1, 4, 5, 6, or 7 and the substrates to be hydrophobized.

**11.** Building material mixtures according to Claim 10, wherein the substrates to be hydrophobized are selected from cement, gypsum, and mixtures thereof.

**12.** Building material mixtures according to Claim 10 or 11, which are selected from interior and exterior renders, filling compounds, adhesives, screeds, and stucco plaster.

## Revendications

1. Procédé pour la préparation de composés organosiliciés O solides à 20°C par transformation d'un équivalent en mole d'un silane S, qui est choisi parmi un hydrocarbyltrihalogénosilane, un hydrocarbyltrihydrocarbyloxysilane ou leurs mélanges ou leurs hydrolysats partiels, avec des composés polyhydroxy P dans un rapport molaire tel qu'il existe, par équivalent en mole de radicaux halogène ou hydrocarbyloxy, 0,3 à 1,3 équivalent en mole de radicaux hydroxy, en présence simultanée d'une proportion d'eau, qui suffit au moins pour hydrolyser les radicaux halogène ou hydrocarbyloxy qui restent encore théoriquement lors d'une conversion quantitative du composé polyhydroxy P, mais qui ne dépasse pas 2 équivalents en mole par équivalent en mole de radicaux halogène ou hydrocarbyloxy.

2. Composés organosiliciés O, pouvant être obtenus selon le procédé selon la revendication 1.

3. Utilisation des composés organosiliciés O selon la revendication 2 pour l'hydrofugation dans la masse de substrats.

4. Procédé selon la revendication 1, dans lequel les radicaux hydrocarbonés du silane S sont des radicaux hydrocarbonés en $C_1$-$C_{15}$ substitués ou non substitués.

5. Procédé selon la revendication 1 ou 4, dans lequel les radicaux hydrocarbyloxy du silane S sont des radicaux alkyle en $C_1$-$C_3$ non substitués.

6. Procédé selon la revendication 1, 4 ou 5, dans lequel les radicaux halogène du silane S sont des radicaux de chlore.

7. Procédé selon la revendication 1, 4, 5 ou 6, dans lequel le composé polyhydroxy P est choisi parmi les $C_2$-$C_6$-glycols, ainsi que les glycols mixtes, linéaires ou ramifiés, monomères ou oligomères, parmi les composés trihydroxy, tétrahydroxy, pentahydroxy et hexahydroxy comprenant 3 à 12 atomes de carbone ainsi que parmi les acides $C_2$-$C_{12}$-hydroxycarboxyliques.

8. Utilisation selon la revendication 3, dans laquelle les composés organosiliciés O sont utilisés pour l'apprêt hydrophobe d'objets finis, en ce qu'ils sont ajoutés au mélange brut lors du procédé de fabrication.

9. Utilisation selon la revendication 3 ou 8, dans laquelle les composés organosiliciés O sont mélangés sous forme de solide dans le matériau de construction solide à hydrofuger.

10. Mélanges de matériau de construction, contenant les composés organosiliciés O pouvant être préparés selon le procédé selon la revendication 1, 4, 5, 6 ou 7 et les substrats à hydrofuger.

11. Mélanges de matériau de construction selon la revendication 10, dans lesquels les substrats à hydrofuger sont choisis parmi le ciment, le plâtre et leurs mélanges.

12. Mélanges de matériau de construction selon la revendication 10 ou 11, qui sont choisis parmi les enduits intérieurs et extérieurs, les masses de bouchage, les adhésifs, les chapes et le plâtre à stuc.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2803561 A
- DE OS10107614 A
- WO 2010052201 A
- US 2887467 A
- DE 1076946
- DE 102004056977
- WO 2006097206 A
- US 2441066 A